(19) **Europäisches Patentamt / European Patent Office / Office européen des brevets**

(11) **EP 1 262 037 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(21) Anmeldenummer: **00990007.7**

(22) Anmeldetag: **20.12.2000**

(51) Int Cl.:
*H04L 9/30* *(2006.01)*   *G06F 7/72* *(2006.01)*

(86) Internationale Anmeldenummer:
**PCT/EP2000/013031**

(87) Internationale Veröffentlichungsnummer:
**WO 2001/048974 (05.07.2001 Gazette 2001/27)**

(54) **TRAGBARER DATENTRÄGER MIT ZUGRIFFSSCHUTZ DURCH SCHLÜSSELTEILUNG**

PORTABLE DATA CARRIER PROVIDED WITH ACCESS PROTECTION BY DIVIDING UP CODES

SUPPORT DE DONNEES PORTATIF A ACCES PROTEGE PAR REPARTITION DES CODES

(84) Benannte Vertragsstaaten:
**AT BE CH CY DE DK ES FI FR GB GR IE IT LI LU MC NL PT SE TR**

(30) Priorität: **28.12.1999 DE 19963408**

(43) Veröffentlichungstag der Anmeldung:
**04.12.2002 Patentblatt 2002/49**

(73) Patentinhaber: **Giesecke & Devrient GmbH**
**81677 München (DE)**

(72) Erfinder:
• **DREXLER, Hermann**
**81371 München (DE)**
• **VATER, Harald**
**35398 Giessen (DE)**

(74) Vertreter: **Klunker . Schmitt-Nilson . Hirsch**
**Winzererstrasse 106**
**80797 München (DE)**

(56) Entgegenhaltungen:
• **KOCHER P C: "TIMING ATTACKS ON IMPLEMENTATIONS OF DIFFIE-HELLMAN, RSA, DSS, AND OTHER SYSTEMS" 16TH. ANNUAL INTERNATIONAL CRYPTOLOGY CONFERENCE. SANTA BARBARA, AUG. 18 - 22, 1996. PROCEEDINGS,BERLIN, SPRINGER,DE, Bd. CONF. 16, 18. August 1996 (1996-08-18), Seiten 104-113, XP000626590 ISBN: 3-540-61512-1 in der Anmeldung erwähnt**
• **MESSERGES T S ET AL: "Power analysis attacks of modular exponentiation in smartcards" CRYPTOGRAPHIC HARDWARE AND EMBEDDED SYSTEMS. INTERNATIONAL WORKSHOP,XX,XX, August 1999 (1999-08), Seiten 144-157, XP000952221**

**Beschreibung**

Die Erfindung betrifft einen Datenträger, der einen Halbleiterchip aufweist, in dem geheime Daten abgespeichert sind und verarbeitet werden.

Datenträger die einen Chip enthalten, werden in einer Vielzahl von unterschiedlichen Anwendungen eingesetzt, beispielsweise zum Durchführen von Finanztransaktionen, zum Bezahlen von Waren oder Dienstleistungen, oder als Identifikationsmittel zur Steuerung von Zugangs- oder Zutrittskontrollen. Bei allen diesen Anwendungen werden innerhalb des Chips des Datenträgers in der Regel geheime Daten verarbeitet, die vor dem Zugriff durch unberechtigte Dritte geschützt werden müssen. Dieser Schutz wird unter anderem dadurch gewährleistet, daß die inneren Strukturen des Chips sehr kleine Abmessungen aufweisen und daher ein Zugriff auf diese Strukturen mit dem Ziel, Daten, die in diesen Strukturen verarbeitet werden, auszuspähen, sehr schwierig ist. Um einen Zugriff weiter zu erschweren, kann der Chip in eine sehr fest haftende Masse eingebettet werden, bei deren gewaltsamer Entfernung das Halbleiterplättchen zerstört wird oder zumindest die darin gespeicherten geheimen Daten vernichtet werden. Ebenso ist es auch möglich, das Halbleiterplättchen bereits bei dessen Herstellung mit einer Schutzschicht zu versehen, die nicht ohne Zerstörung des Halbleiterplättchens entfernt werden kann.

Mit einer entsprechenden technischen Ausrüstung, die zwar extrem teuer aber dennoch prinzipiell verfügbar ist, könnte es einem Angreifer möglicherweise gelingen, die innere Struktur des Chips freizulegen und zu untersuchen. Das Freilegen könnte beispielsweise durch spezielle Ätzverfahren oder durch einen geeigneten Abschleifprozeß erfolgen. Die so freigelegten Strukturen des Chips, wie beispielsweise Leiterbahnen, könnten mit Mikrosonden kontaktiert oder mit anderen Verfahren untersucht werden, um die Signalverläufe in diesen Strukturen zu ermitteln. Anschließend könnte versucht werden, aus den detektierten Signalen geheime Daten des Datenträgers, wie z.B. geheime Schlüssel zu ermitteln, um diese für Manipulationszwecke einzusetzen. Ebenso könnte versucht werden, über die Mikrosonden die Signalverläufe in den freigelegten Strukturen gezielt zu beeinflussen.

In jüngerer Zeit sind überdies Methoden bekannt geworden, die es erlauben durch die Messung der Stromaufnahme oder des Zeitverhaltens bei der Verschlüsselung auf die geheimen Daten, insbesondere den geheimen Schlüssel zu schließen (Paul C. Kocher, "Timing attacks on implementation of Diffie-Hellman, RSA, DSS, and other Systems", Springer Verlag 1998; WO 99/35782).

Ein einfacher derartiger Angriff besteht in der "Simple Power Analysis" (SPA). Bei dieser Analysemethode wird beispielsweise eine bekannte Nachricht M einer Verschlüsselung mit einem geheimen Schlüssel d unterzogen, d.h. es wird der verschlüsselte Text $Y = M^d \bmod n$ gebildet. Bei der modularen Exponentiation wird bei einer "1" im Exponenten d eine Quadrier-Operation mit dem Zwischenergebnis und eine Multilizier-Operation mit M durchgeführt, während bei einer "0" in d nur eine Quadrier-Operation mit dem Zwischenergebnis ausgeführt wird. Bei bekanntem M kann durch die Beobachtung des Strom und/oder Zeitverhaltens während der Operationen die Nachricht M erkannt werden. Da diese immer bei Vorliegen einer "1" in d verwendet wird, kann ohne weiteres auf den Schlüssel geschlossen werden.

Diesem Angriff kann ohne weiteres durch einfache Änderungen in der Nachricht M bzw. im Schlüssel d begegnet werden. Aus Paul C. Kocher, "Timing Attacks on implementation of Diffie-Hellman, RSA, DSS, and other Systems", Springer Verlag 1998 und der internationalen Patentanmeldung WO 99/35782 sind weitere Analysemethoden bekannt, bei denen auch bei geänderter, d.h. verschleierter Nachricht oder verschleiertem Schlüssel durch die Aufnahme einer Vielzahl von Meßkurven, in denen das Stromverhalten des integrierten Schaltkreises gemessen wird auf den Schlüssel geschlossen werden kann ("Differential Power Analysis" (DPA) bzw. Higher Order DPA).

Als Sicherungsmaßnahme wurde ein sogenanntes "Exponent Blinding" vorgeschlagen, bei dem der geheime Schlüssel d nicht direkt verwendet wurde.

Zum einen kann anstelle des geheimen Schlüssels d für die Verschlüsselung $d + r*\Phi$ verwendet werden, wobei r eine Zufallszahl und $\Phi$ die Eulersche PHI-Funktion ist. Speziell für den RSA-Algorithmus gilt: $n = p*q$, wobei p und q Primzahlen sind und somit $\Phi = (p-1)*(q-1)$ ist. Unter Anwendung des Eulers-Theorem gilt: $M^d \bmod n = M^{d+r*\Phi} \bmod n$.

Wenn bei jeder Berechnung eine andere Zufallszahl r verwendet wird, kann auch bei einer Vielzahl von Analyse-Reihen nicht auf den Schlüssel d geschlossen werden.

Alternativ kann der geheime Schlüssel d in $d1*d2 \bmod \Phi$ zerlegt werden. Es wird für die Verschlüsselung $Y = M^{d1*d2 \bmod \Phi} \bmod n = (M^{d1})^{d2} \bmod n$.

Der Nachteil dieser Schutzmöglichkeit besteht jedoch darin, daß aus Mangel an Speicherplatz die Primzahlen p und q oder $\Phi$ üblicherweise nicht in einer Chipkarte abgelegt sind.

Der geheime Schlüssel d kann auch in eine Summe aus d1 und d2 zerlegt werden. Es gilt dann $d = d1 + d2$ bzw. für die Verschlüsselung:

$$Y = M^{d1+d2} \bmod n = M^{d1} * M^{d2} \bmod n = (M^{d1} \bmod n * M^{d2} \bmod n) \bmod n.$$

Um eine ausreichend hohe Sicherheit zu erhalten, muß bei der Zerlegung des Exponenten in d = d1 + d2 oder d = d1*d2 mod Φ für jede Berechnung ein neues, zufälliges d1/d2-Paar gewählt werden. Da die Erzeugung von Zufallszahlen in der Regel sehr langsam ist, eignet sich dieses Verfahren nicht zum Einsatz in Chipkarten. Zudem wird der Rechenaufwand für die modulare Exponentiation wesentlich erhöht, so daß auch dies gegen einen Einsatz in der Chipkarte spricht.

Es ist daher Aufgabe der Erfindung, geheime Daten, die im Chip eines tragbaren Datenträgers vorhanden sind, vor unberechtigtem Zugriff zu schützen, wobei der effiziente Einsatz der Daten nach wie vor gewährleistet sein soll.

Diese Aufgabe wird ausgehend vom Oberbegriff der Ansprüche 1 bzw. 7 durch die kennzeichnenden Merkmale des jeweiligen Anspruchs gelöst.

Die Erfindung gibt einen Datenträger mit einem Halbleiterchip der wenigstens einen Speicher aufweist, in dem ein Betriebsprogramm abgelegt ist, das mehrere Befehle beinhaltet, wobei jeder Befehl von außerhalb des Halbleiterchips detektierbare Signale hervorruft, an.

Gemäß der Erfindung ist der Datenträger ausgelegt, um zur Durchführung sicherheitsrelevanter Operationen im Halbleiterchip abgelegte oder von diesem generierte geheime Daten in mindestens drei Datenteile aufzuteilen. Er enthält eine Rechner- bzw. Recheneinheit zum Berechnen einer Zufallszahl und zur Teilung der geheimen Daten durch die Zufallszahl. Der erste Datenteil besteht aus dem ganzzahligen Ergebnis der Teilung, der zweite Teil ist durch den Rest der Teilung gegeben und der dritte Datenteil ist die Zufallszahl selbst.

Gemäß einer vorteilhaften Ausgestaltung der Erfindung bestehen die geheimen Daten aus dem geheimen Schlüssel für eine Verschlüsselung von Nachrichten, wobei vorzugsweise der geheime Schlüssel als Exponent bei der Berechnung von Gruppen-Operationen in asymmetrischen Verschlüsselungsverfahren (public-key-Verfahren, z.B. elliptische Kurven, RSA, usw.) bzw. von Modulo-Operationen eingesetzt wird.

Eine weitere Ausgestaltung der Erfindung sieht vor, daß die Zufallszahl so gewählt wird, daß die Länge der Zufallszahl zusammen mit dem Hamminggewicht der Zufallszahl bei verschiedenen Zufallszahlen etwa konstant ist. Auf diese Weise wird erreicht, daß aus der Zeitdauer, welche für die modulare Exponentiation, die proportional zur Länge des Exponenten und dem Hamminggewicht des Exponenten ist, nicht auf die geheimen Daten geschlossen werden kann.

Das erfindungsgemäße Verfahren sieht vor, daß der geheime Schlüssel durch eine vergleichsweise kurze Zufallszahl geteilt wird. Das Teilungsergebnis ohne Rest ergibt den ersten Teil des Schlüssels, der Rest ergibt den zweiten Teil des Schlüssels und die Zufallszahl den dritten Teil.

Für die Verschlüsselung einer Nachricht M gilt Y = M$^d$ mod n. Der geheime Schlüssel d wird in d1, d2 und r aufgeteilt, wobei d1 = d/r (r ist eine Zufallszahl) ohne Rest gilt. Der Rest der Teilung ist der zweite Teil d2 des Schlüssels d. Damit gilt d2= d mod r. Für den Schlüssel d gilt somit d = r*d1 + d2.

Damit ergibt sich ein Verschlüsselungstext

$$Y = M^d \bmod n = M^{r*d1 + d2} \bmod n = (M^r)^{d1} * M^{d2} \bmod n =$$

$$= ((M^r)^{d1} \bmod n * M^{d2} \bmod n) \bmod n.$$

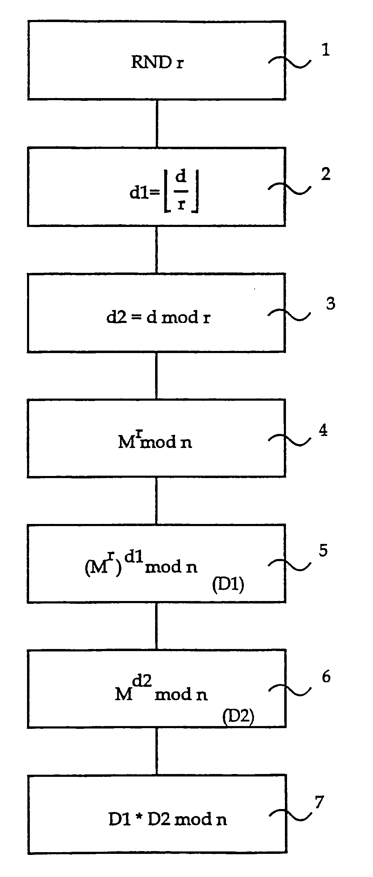

Der Ablauf der Bildung des verschlüsselten Textes Y ist in Fig. 1 dargestellt.

In Schritt 1 wird zunächst eine Zufallszahl r gebildet. Anschließend wird in Schritt 2 aus dem geheimen Schlüssel d durch Teilung mit der zuvor erhaltenen Zufallszahl r der erste Schlüsselteil d1 berechnet. Der zweite Teil d2 des Schlüssels wird durch Bildung von d mod r erhalten.

In Schritt 4 wird mit der Berechnung des Verschlüsselungstextes begonnen, indem zunächst M$^r$ mod n berechnet wird. Im nächsten Schritt 5 wird D1 = (M$^r$)$^{d1}$ mod n und in Schritt 6 wird D2 = M$^{d2}$ mod n berechnet.

Die Reihenfolge der einzelnen Rechenoperationen kann natürlich zum Teil auch zeitlich vertauscht werden. So kann zuerst M$^{d1}$ mod n berechnet werden und dann (M$^{d1}$)$^r$ mod n, da (M$^r$)$^{d1}$ mod n = (M$^{d1}$)$^r$ mod n ist.

Im letzten Schritt 7 werden die Zwischenergebnisse D1 und D2 miteinander multipliziert und der Modulo zu n gebildet. Es gilt damit

$$D1 * D2 \bmod n = M^d \bmod n = Y.$$

Die Erfindung hat den Vorteil, daß weder die Primzahlen p und q zur Bildung von Φ in der Karte gespeichert sein müssen und auch die Erzeugung langer Zufallszahlen, die sehr viel Rechenzeit in Anspruch nimmt, vermieden wird. Es wird weiterhin der Rechenaufwand für die Modulo-Operationen in Grenzen gehalten, so daß die erfindungsgemäße Lösung sowohl sicher als auch effizient in einer Chipkarte eingesetzt werden kann. Weiterhin müssen bei dem beschriebenen Verfahren keine Daten im nichtflüchtigen Speicher des Datenträgers abgeändert werden, was Zeit beanspruchen und zu einem Degradieren des nichtflüchtigen Speichers führen würde.

Da eine modulare Exponentiation eine Zeitdauer benötigt, die proportional zur Länge des Exponenten und des Hamminggewichts des Exponenten ist, kann eine zusätzliche Erhöhung der Sicherheit erreicht werden, wenn für die Erzeugung der Zufallszahl r ein Verfahren gewählt wird, bei der die Länge von r und das Hamminggewicht von r eine Konstante ergibt.

Die Erfindung kann für eine Vielzahl von Verschlüsselungssysteme angewendet werden. Es sei beispielhaft auf die RSA-Verschlüsselung, die Verschlüsselung nach ElGamal, DSA, Elliptische Kurvensysteme usw. verwiesen.

**Patentansprüche**

1. Datenträger mit einem Halbleiterchip der wenigstens einen Speicher aufweist, in dem ein Betriebsprogramm abgelegt ist, das mehrere Befehle beinhaltet, wobei jeder Befehl von außerhalb des Halbleiterchips detektierbare Signale hervorruft, **dadurch gekennzeichnet, daß** der Datenträger ausgelegt ist, um zur Durchführung sicherheitsrelevanter Operationen im Halbleiterchip abgelegte oder von diesem generierte geheime Daten in mindestens drei Datenteile aufzuteilen, wobei eine Recheneinheit zum Berechnen einer Zufallszahl und zur Teilung der geheimen Daten durch die Zufallszahl enthalten ist, wobei der erste Datenteil das ganzzahlige Ergebnis der Teilung ist, der zweite Teil der Rest der Teilung und der dritte Teil die Zufallszahl selbst ist.

2. Datenträger nach Anspruch 1, **dadurch gekennzeichnet, daß** die geheimen Daten ein geheimer Schlüssel für eine Verschlüsselung von Nachrichten sind.

3. Datenträger nach Anspruch 1 oder 2, **dadurch gekennzeichnet, daß** die geheimen Daten als Exponent bei der Berechnung von Gruppen-Operationen in asymetrischen Verschlüsslelungsverfahren Verwendung finden.

4. Datenträger nach einem der Ansprüche 1 bis 3, **dadurch gekennzeichnet, daß** die geheimen Daten als Exponent bei der Berechnung von Modulo-Operationen eingesetzt werden.

5. Datenträger nach einem der Ansprüche 1 bis 3, **dadurch gekennzeichnet, daß** der geheime Schlüssel als Exponent bei der Berechnung von Modulo-Operationen eingesetzt wird.

6. Datenträger nach einem der Ansprüche 1 - 5, **dadurch gekennzeichnet, daß** die Zufallszahl so gewählt wird, daß die Länge der Zufallszahl zusammen mit dem Hamminggewicht der Zufallszahl bei verschiedenen Zufallszahlen etwa konstant ist.

7. Verfahren zur Sicherung geheimer Daten in Datenträgern mit einem Halbleiterchip der wenigstens einen Speicher aufweist, in dem ein Betriebsprogramm abgelegt ist, das mehrere Befehle beinhaltet, wobei jeder Befehl von außerhalb des Halbleiterchips detektierbare Signale hervorruft, **dadurch gekennzeichnet, daß** zur Durchführung sicherheitsrelevanter Operationen im Halbleiterchip abgelegte oder von diesem generierte geheime Daten in mindestens drei Datenteile aufgeteilt werden, wobei zunächst eine Zufallszahl berechnet wird und der erste Datenteil aus dem ganzzahligen Ergebnis einer Teilung der geheimen Daten durch die Zufallszahl ist, der zweite Teil aus dem Rest der Teilung besteht und der dritte Teil die Zufallszahl selbst ist.

8. Verfahren nach Anspruch 7, **dadurch gekennzeichnet, daß** die geheimen Daten ein geheimer Schlüssel für eine Verschlüsselung von Nachrichten sind.

9. Verfahren nach Anspruch 7 oder 8, **dadurch gekennzeichnet, daß** die geheimen Daten als Exponent bei der Berechnung von Gruppen-Operationen in asymetrischen Verschlüsselungsverfahren Verwendung finden.

10. Verfahren nach Anspruch 7 oder 8, **dadurch gekennzeichnet, daß** die geheimen Daten als Exponent bei der Berechnung von Modulo-Operationen eingesetzt werden.

11. Verfahren nach Anspruch 7 oder 8, **dadurch gekennzeichnet, daß** der geheime Schlüssel als Exponent bei der Berechnung von Modulo-Operationen eingesetzt wird.

12. Verfahren nach einem der Ansprüche 7 - 11, **dadurch gekennzeichnet, daß** die Zufallszahl so gewählt wird, daß die Länge der Zufallszahl zusammen mit dem Hamminggewicht der Zufallszahl bei verschiedenen Zufallszahlen etwa konstant ist.

**13.** Verfahren nach Anspruch 7 **dadurch gekennzeichnet, daß** zur Bildung einer verschlüsselten Nachricht

- eine Zufallszahl r gebildet wird,
- aus einem geheimen Schlüssel d durch Teilung mit der zuvor erhaltenen Zufallszahl r ein erster Schlüsselteil (d1) berechnet wird,
- ein zweiter Teil (d2) des Schlüssels durch Bildung von d mod r erhalten wird,
- mit der Berechnung des Verschlüsselungstextes begonnen wird, indem $M^r$ mod n berechnet wird,
- D1 = $(M^r)^{d1}$ mod n und D2 = $M^{d2}$ mod n berechnet wird und
- die Zwischenergebnisse D1 und D2 miteinander multipliziert und der Modulo zu n gebildet wird.

**14.** Verfahren nach Anspruch 13, **dadurch gekennzeichnet, daß** zur Berechnung von D1 zunächst $M^{d1}$ mod n und nachfolgend $(M^{d1})^r$ mod n berechnet wird.

**Claims**

**1.** A data carrier with a semiconductor chip having at least one memory which stores an operating program containing a plurality of commands, each command producing signals detectable from outside the semiconductor chip, **characterized in that** the data carrier is designed to divide secret data stored in the semiconductor chip or generated thereby into at least three data portions for carrying out security-relevant operations, an arithmetic unit being contained for calculating a random number and for dividing the secret data by the random number, the first data portion being the integer result of the division, the second portion the remainder of the division, and the third portion the random number itself.

**2.** The data carrier according to claim 1, **characterized in that** the secret data are a secret key for encryption of messages.

**3.** The data carrier according to claim 1 or 2, **characterized in that** the secret data are used as an exponent in the calculation of group operations in asymmetric encryption methods.

**4.** The data carrier according to any of claims 1 to 3, **characterized in that** the secret data are used as an exponent in the calculation of modulo operations.

**5.** The data carrier according to any of claims 1 to 3, **characterized in that** the secret key is used as an exponent in the calculation of modulo operations.

**6.** The data carrier according to any of claims 1-5, **characterized in that** the random number is selected such that the length of the random number together with the Hamming weight of the random number is approximately constant for different random numbers.

**7.** A method for protecting secret data in data carriers with a semiconductor chip having at least one memory which stores an operating program containing a plurality of commands, each command producing signals detectable from outside the semiconductor chip, **characterized in that** secret data stored in the semiconductor chip or generated thereby are divided into at least three data portions for carrying out security-relevant operations, a random number first being calculated and the first data portion being from the integer result of a division of the secret data by the random number, the second portion comprising the remainder of the division, and the third portion being the random number itself.

**8.** The method according to claim 7, **characterized in that** the secret data are a secret key for encryption of messages.

**9.** The method according to claim 7 or 8, **characterized in that** the secret data are used as an exponent in the calculation of group operations in asymmetric encryption methods.

**10.** The method according to claim 7 or 8, **characterized in that** the secret data are used as an exponent in the calculation of modulo operations.

**11.** The method according to claim 7 or 8, **characterized in that** the secret key is used as an exponent in the calculation of modulo operations.

**12.** The method according to any of claims 7-11, **characterized in that** the random number is selected such that the length of the random number together with the Hamming weight of the random number is approximately constant for different random numbers.

**13.** The method according to claim 7, **characterized in that** for forming an encrypted message

     - a random number r is formed,
     - a first key portion (d1) is calculated from a secret key d by division by the previously obtained random number r,
     - a second portion (d2) of the key is obtained by forming d mod r,
     - the calculation of the encrypted text is started by calculating $M^r$ mod n,
     - $D1 = (M^r)^{d1}$ mod n and $D2 = M^{d2}$ mod n are calculated, and
     - the intermediate results D1 and D2 are multiplied by each other and the modulo by n is formed.

**14.** The method according to claim 13, **characterized in that** $M^{d1}$ mod n is first calculated and then $(M^{d1})^r$ mod n for calculating D1.

**Revendications**

**1.** Support de données comprenant une puce à semi-conducteurs qui présente au moins une mémoire dans laquelle est déposé un programme d'exploitation, qui contient plusieurs instructions, chaque instruction provoquant des signaux détectables par l'extérieur de la puce à semi-conducteurs, **caractérisé en ce que**, pour exécuter des opérations concernant la sécurité, le support de données est agencé pour diviser des données secrètes déposées dans la puce à semi-conducteurs ou générées par celle-ci en au moins trois parties de données, une unité de calcul pour le calcul d'un nombre aléatoire et pour la division des données secrètes par le nombre aléatoire étant incluse, sachant que la première partie de données est le résultat à nombre entier de la division, la seconde partie le reste de la division et la troisième partie le nombre aléatoire même.

**2.** Support de données selon la revendication 1, **caractérisé en ce que** les données secrètes sont une clé sécrète pour un codage d'informations.

**3.** Support de données selon la revendication 1 ou 2, **caractérisé en ce que** les données secrètes sont appliquées comme exposant lors du calcul d'opérations de groupes dans des procédés de codage asymétriques.

**4.** Support de données selon l'une quelconque des revendications 1 à 3, **caractérisé en ce que** les données secrètes sont utilisées comme exposant lors du calcul d'opérations modulo.

**5.** Support de données selon l'une quelconque des revendications 1 à 3, **caractérisé en ce que** la clé sécrète est utilisée comme exposant dans le calcul d'opérations modulo.

**6.** Support de données selon l'une quelconque des revendications 1 à 5, **caractérisé en ce que** le nombre aléatoire est conçu de telle sorte que la longueur du nombre aléatoire est à peu près constant conjointement avec le poids de Hamming du nombre aléatoire pour différents nombres aléatoires.

**7.** Procédé pour garantir des données secrètes dans des supports de données avec une puce à semi-conducteurs qui présente au moins une mémoire dans laquelle est déposé un programme d'exploitation, qui contient plusieurs instructions, sachant que chaque instruction entraîne des signaux pouvant être détectés par l'extérieur de la puce à semi-conducteurs, **caractérisé en ce que**, pour exécuter des opérations concernant la sécurité, des données secrètes déposées dans la puce à semi-conducteurs ou générées par celle-ci sont divisées en au moins trois parties de données, sachant qu'un nombre aléatoire est d'abord calculé et que la première partie de données est constituée du résultat à nombre entier d'une division des données secrètes par le nombre aléatoire, la seconde partie par le reste de la division et la troisième partie par le nombre aléatoire même.

**8.** Procédé selon la revendication 7, **caractérisé en ce que** les données secrètes sont une clé sécrète pour un codage d'informations.

9.  Procédé selon la revendication 7 ou 8, **caractérisé en ce que** les données secrètes sont utilisées en tant qu'exposant lors du calcul d'opérations de groupes dans des procédés de codage asymétriques.

10. Procédé selon la revendication 7 ou 8, **caractérisé en ce que** les données secrètes sont utilisées comme exposant lors du calcul d'opérations modulo.

11. Procédé selon la revendication 7 ou 8, **caractérisé en ce que** la clé sécrète est utilisée comme exposant lors du calcul d'opérations modulo.

12. Procédé selon l'une quelconque des revendications 7 à 11, **caractérisé en ce que** le nombre aléatoire est choisi de telle sorte que la longueur du nombre aléatoire est à peu près constante en même temps que le poids de Hamming du nombre aléatoire pour différents nombre aléatoires.

13. Procédé selon la revendication 7, **caractérisé en ce que**, pour former une information codée,

    - on forme un nombre aléatoire r,
    - on calcule une première partie de code (d1) à partir d'une clé sécrète d par division par le nombre aléatoire r obtenu auparavant,
    - une seconde partie (d2) du code par la formation de d mod r,
    - on commence le calcul du texte de codage en calculant $M^r$ mod n,
    - on calcule D1 = $(M^r)^{d1}$ mod n et D2 = $M^{d2}$ mod n et
    - on multiplie les résultats intermédiaires D1 et D2 l'un avec l'autre et on forme le modulo pour n.

14. Procédé selon la revendication 13, **caractérisé en ce que**, pour le calcul de D1, on calcule d'abord $M^{d1}$ mod n et ensuite $(M^{d1})^r$ mod n.

$$\boxed{\text{RND } r} \sim 1$$

$$\boxed{d1 = \left\lfloor \dfrac{d}{r} \right\rfloor} \sim 2$$

$$\boxed{d2 = d \bmod r} \sim 3$$

$$\boxed{M^{r} \bmod n} \sim 4$$

$$\boxed{(M^{r})^{d1} \bmod n \quad (D1)} \sim 5$$

$$\boxed{M^{d2} \bmod n \quad (D2)} \sim 6$$

$$\boxed{D1 * D2 \bmod n} \sim 7$$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9935782 A

### In der Beschreibung aufgeführte Nicht-Patentliteratur

- **PAUL C. KOCHER.** Timing attacks on implementation of Diffie-Hellman, RSA, DSS, and other Systems. Springer Verlag, 1998

- **PAUL C. KOCHER.** *Timing Attacks on implementation of Diffie-Hellman, RSA, DSS, and other Systems,* 1998